# EUROPEAN PATENT SPECIFICATION

(11) **EP 3 865 826 B1**
(45) Date of publication and mention of the grant of the patent: **28.06.2023**
(21) Application number: 21155974.5
(22) Date of filing: 09.02.2021
(51) Int. Cl.: G01D 5/20, G01P 3/00

(54) **DETERMINING A ROTATIONAL DIRECTION OF A RESOLVER**
BESTIMMUNG EINER DREHRICHTUNG EINES RESOLVERS
DÉTERMINATION DE LA DIRECTION DE ROTATION D'UN RÉSOLVEUR

(30) Priority: 11.02.2020 US 202016787315
(43) Date of publication of application: 18.08.2021
(73) Proprietor: Hamilton Sundstrand Corporation, Charlotte, NC 28217-4578 (US)
(72) Inventor: WINER, Gordon Elliott, Prescott, AZ 86303 (US)
(74) Representative: Dehns

(56) References cited:
- JP-A- 2008 298 745
- US-A- 4 357 569
- US-A- 5 198 735
- US-A- 5 204 603
- US-A- 5 347 277

## Description

### BACKGROUND

Exemplary embodiments pertain to the art of resolvers and more specifically to determining the resolver rotation direction using non-analog means. The resolver direction and speed may be used as, but not limited to, a precision method of determining rotational velocity that is superior to existing methods.

A resolver is a special type of rotary transformer that couples the voltage from an input (primary) winding into two output (secondary) windings, where a magnitude of the voltage varies as a function of angular position. The device includes a rotor attached to a shaft that moves with a load and a stator that remains stationary. The rotor includes a primary winding, and the stator includes two secondary windings that are angularly offset with respect to one another by 90°. Conventional methods of determining the clockwise or counter-clockwise rotational direction of the shaft angle is to use trigonometric math on the secondary windings (sine and cosine windings) to calculate shaft angle, and then subtract the current angle from the previous angle. US 5 198 735 A describes a method for eliminating position tracking errors in the presence of revolver excitation errors for motion control systems. US 5 204 306 A describes open circuit detection for a pulsed resolver position sensing system. US 4 357 569 A describes a control device for a synchronous motor. JP 2008 298745 A describes a rotation detecting device using a resolver.

### BRIEF DESCRIPTION

A system is described herein and defined in claim 1.

[deleted]

In addition to one or more of the features described herein, the synchronizer circuit comprises a first circuit, second circuit, and a third circuit

In addition to one or more of the features described herein, further embodiments include a synchronizer circuit including a first flip flop, a second flip flop and a third flip flop corresponding to the first comparator circuit, a second comparator, and a third comparator of the polarity detection circuit.

In addition to one or more of the features described herein, further embodiments include a synchronization clock generation circuit that is coupled to the synchronizer circuit.

In addition to one or more of the features described herein, further embodiments include a synchronization clock generation circuit that is configured to provide a clock signal to the synchronizer circuit at a configurable threshold.

In addition to one or more of the features described herein further embodiments include a synchronization clock generation circuit that includes a rectifier, a filter and a comparator to configure a threshold to trigger the clock signal.

In addition to one or more of the features described herein, further embodiments include a reset circuit that is configured to initialize the synchronizer circuit.

In addition to one or more of the features described herein, further embodiments include a controller that is configured to determine an under-speed condition or a non-rotation condition.

[deleted]

[deleted]

[deleted]

[deleted]

[deleted]

[deleted]

[deleted]

Technical effects of embodiments of the present disclosure include determining the rotational direction of the resolver by detecting the quadrant the resolver transitions to.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 depicts an example resolver;
FIG. 2 depicts a flow diagram for determining a rotational direction of the resolver in accordance with one or more embodiments;
FIG. 3 depicts the quadrant of operations in accordance with one or more embodiments;
FIG. 4 depicts a logic circuit for determining the instantaneous polarities of the excitation voltage, sine voltage, and cosine voltages, with a means of compensating the phase shift between the primary voltage (excitation), and the secondary voltages (sine, cosine) in accordance with one or more embodiments;
FIG. 5 depicts timing waveforms during the operation of the resolver showing the compensation of the phase shift between the primary voltage (excitation) and the secondary voltages (sine "phase shift #1", cosine "phase shift #2") and the resulting logic state (lower 3 traces) when the "SYNC_CLK" signal clocks the Synchronizer flip flops in FIG. 4 in accordance with one or more embodiments;
FIG. 6 depicts a logic implementation for determining a rotational direction of the resolver in accordance with one or more embodiments; and
FIG. 7 depicts an example logic table used in determining the rotational direction of the resolver in accordance with one or more embodiments.

### DETAILED DESCRIPTION

The techniques described herein provide a method for using the resolver as a tachometer. Conventional techniques that are used to extract the velocity (speed and direction) from the resolver uses the first derivative of the resolver shaft position which is subject to noise issues that are associated with rate-of-change measurements of the resolver.

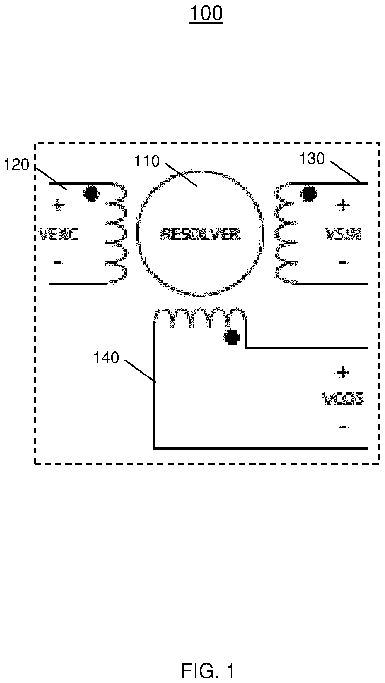

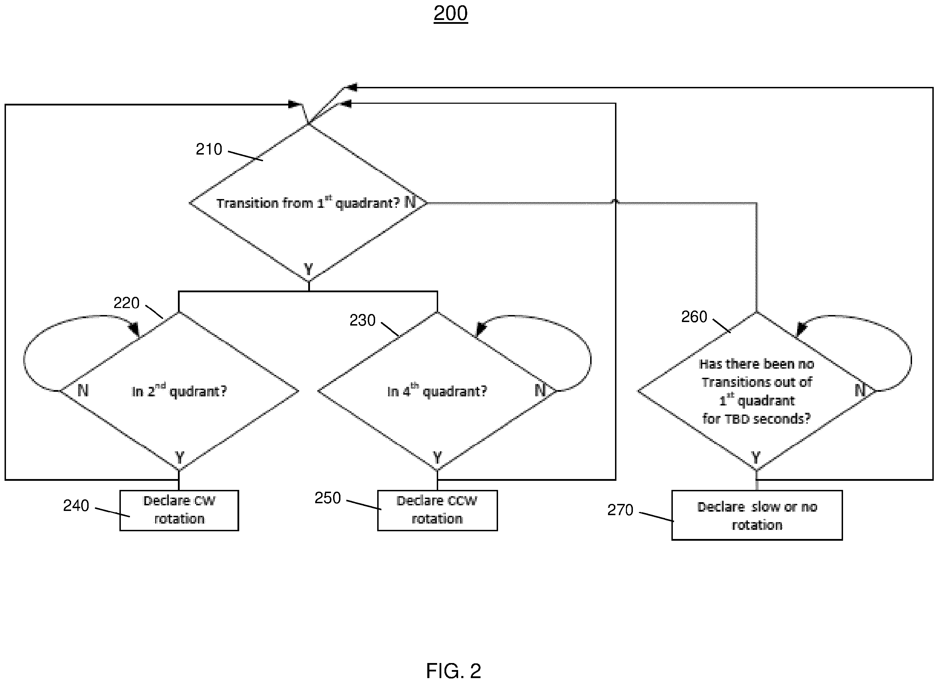

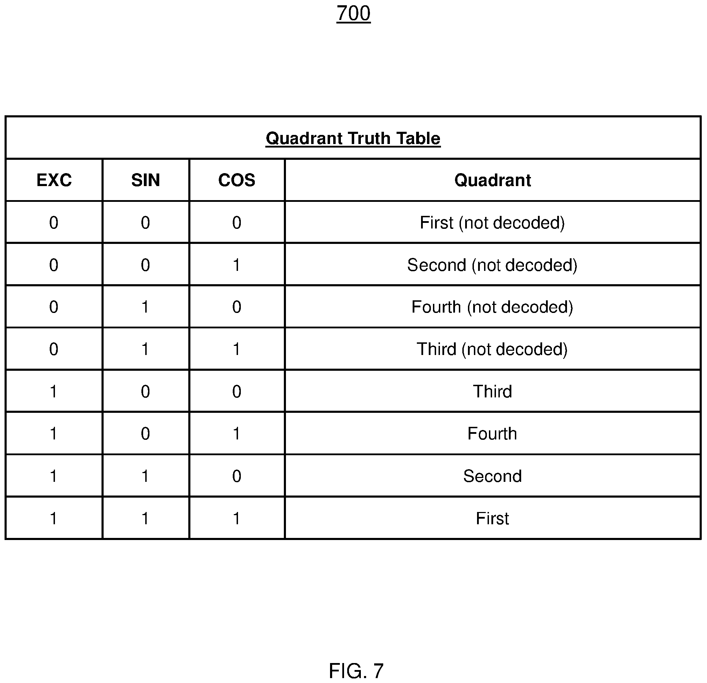

FIG. 1 depicts a resolver 100 which includes a resolver shaft 110, a primary winding (VEXC) 120 and two secondary windings (VSIN and VCOS) 130, 140. The resolver 100 functions similar to an electrical transformer. The primary winding 120 and the secondary windings 130, 140 is energized by an alternating current (AC) source (not shown). The secondary windings 130 and 140 are offset from each other by 90 mechanical degrees. The resolver shaft 110 rotates according to the mechanical system to which it is monitoring. The resolver 100 can operate as a tachometer to measure the speed of a rotating mechanical system by monitoring pulses that are generated during each revolution of the resolver shaft. One or more aspects of the disclosure supply one pulse per revolution (separate from the clockwise and counter-clockwise signals). The feedback from the primary winding 120 and secondary windings 130 and 140 can be used to determine the angular quadrant by examining the instantaneous (Boolean) polarities as per the table provided in FIG.7. The techniques described herein are used to determine the rotational direction of the resolver and is further discussed below with references to FIGS. 2-7.

Now referring to FIG. 2, a flow diagram 200 for determining a direction of a rotation of the resolver in accordance with one or more embodiments is shown. The flow diagram begins at block 210. In this non-limiting example, the resolver 100 is initialized to the first quadrant and block 210 determines whether there is a transition from the first quadrant. If yes, the method 200 proceeds to block 220 and 230.

Block 220 determines whether the resolver 100 has transitioned to from the first quadrant to the second quadrant. If yes, the method 200 proceeds to block 240 and it is determined that the resolver 100 is rotating in a clockwise direction. Otherwise, at block 230, if it is determined the resolver 100 has transitioned from the first quadrant to the fourth quadrant, block 250 determines the resolver 100 is rotating in the counter-clockwise direction. However, if the method 200 from block 210 proceeds to block 260 there has been no transition out of the first quadrant within a configurable time period. At block 270, it is declared the resolver 100 is rotating too slowly or there is no rotation. The method 200 can return to block 210 to continue monitoring the resolver 100.

It should be understood the resolver 100 is initialized to the first quadrant for illustrative purposes. The resolver 100 can be configured to determine the rotational direction by initializing the resolver 100 to any of the four quadrants and tracking whether the transition is in the clockwise or counter clockwise direction by determining the previous quadrant or the next quadrant the resolver is operating in using the techniques that are described herein. It should be understood that for illustrative purposes clockwise is defined as a transition from the first quadrant (0 to 90 mechanical degrees) to the second quadrant (90 to 180 mechanical degrees), and counter-clockwise is defined as a transition from the first quadrant to the fourth quadrant (270 to 0 or 360 mechanical degrees).

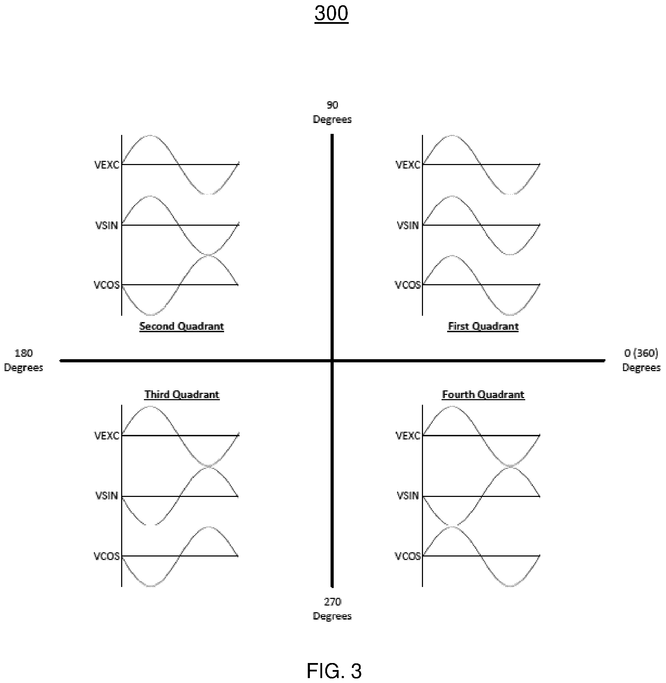

FIG. 3 depicts the phase relationship of each of the windings of the resolver in accordance with one or more embodiments. The instantaneous phase relationships of the excitation voltage, sine voltage, and cosine voltage are used to determine the current resolver mechanical angular quadrant. As shown, when the resolver is in the first quadrant (0-90 degrees), the voltage of the VSIN and VCOS are in phase with the VEXC. When in the second quadrant (90-180 degrees), the VSIN is in phase with the VEXC and the VCOS is 180 degrees out of phase with the excitation. In the third quadrant (180-270 degrees), the VSIN and VCOS are both 180 degrees out of phase with the VEXC. In the fourth quadrant 270-360 (0 degrees), the VCOS is in phase with the VEXC and the VSIN is 180 degrees out of phase with VEXC. The magnitude of the voltage alone is not sufficient to determine the angle of the resolver, and therefore, the phase relationships as shown must be analyzed.

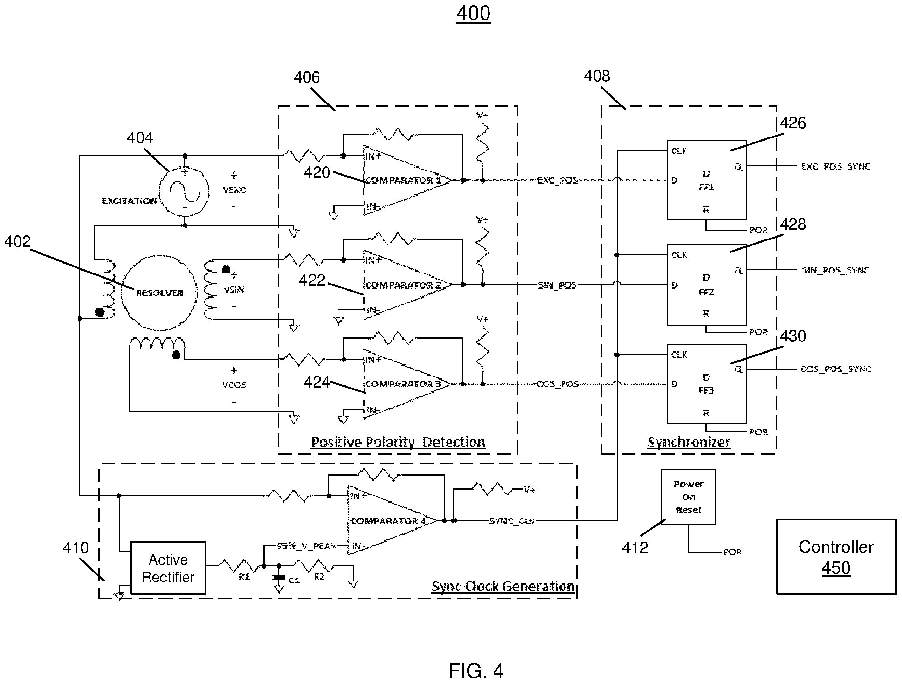

FIG. 4 depicts a circuit 400 for determining the rotation direction of the resolver in accordance with one or more embodiments. A resolver 402 that receives an excitation voltage from a source 404 is shown. A positive polarity detection circuit 406 is coupled to the output(s) of the resolver 402 and the voltage source. The positive polarity detection circuit 406 includes comparators 420, 422, and 424. The comparators 420, 422, and 424 have a positive input and negative input. In addition, comparators 420, 422, and 424 receive an input that is used as a reference signal and another input signal that is compared to the reference signal. If the input signal is higher than the reference signal, the output is HI. However, if the input signal is lower than the reference signal, the output is LO. The first comparator 420 receives a signal from the voltage source 404 at the positive input of the comparator 420, and the negative input of the first comparator 420 is grounded. A second comparator 422 receives a signal from a secondary winding from the resolver at the positive input of the second comparator 422, and the negative input of the second comparator 422 is grounded. The third comparator 424 receives a signal from the other secondary winding from the resolver at the positive input of the third comparator 424, and the negative input is grounded. The output of each comparator 420, 422, and 424 provide a voltage of the corresponding windings in the resolver 402. In an example, if the comparators 420, 422, and 424 provide a HI signal, the voltage is positive and if the comparator provides a LO signal the voltage is negative. The quadrant the resolver 402 is operating in can be determined using the combination of outputs from the comparators 420, 422, and 424.

The outputs from the comparators 420, 422, and 424 of the positive polarity detection circuit 406 are coupled to the synchronizer circuit 408 to align the output signals from the positive polarity detection circuit 406. A phase-shift (time delay) is caused by the physical architecture of the resolver 402 and its windings.

The synchronization clock generation circuit 410 includes flip flops 426, 428, and 430. The flip flops 426, 428, and 430 are D flip flops but it should be understood that any other type of flip flop or storage device can be used to perform the synchronization of the signals from the positive polarity detection circuit 406. The D flip flop includes a D input and a clock signal input. The D flip flop can also include a Set (S) and Reset (R) signal. The D flip flop provides an output Q. A synchronization clock signal (sync_clk) from the synchronization clock generation circuit 410 is used to synchronize the voltage signals from the polarity detection circuit 406.

It should be understood that the VSIN and VCOS voltages of practical resolvers have a phase-shift (time lag) that is relative to the VEXC voltage which is typically between the phase shifts 10 to 30 degrees. This phase-shift, if not accounted for, can cause the circuitry to produce erroneous quadrant detection. Therefore, a synchronization technique such as that described herein is required to determine the angular quadrant the resolver shaft is in.

Each of the flip flops 426, 428, and 430 receive the corresponding signal from the comparators 420, 422, and 424 and store the input until a the synchronization clock signal (sync_clk) is received from the synchronization clock generation circuit 410. In the arrangement shown in FIG. 4, the synchronization clock generation circuit 410 can include a rectifier, an RC filter stage and a comparator to generate the synchronization clock signal (sync_clk) that is provided to the flip flops 426, 428, and 430 to synchronize the signals. It should be understood that other architectures can be used to generate the clock signals and is not intended to be limited by that shown in FIG. 4. In one configuration, the synchronization clock signal (sync_clk) is designed to operate at 95% of the voltage peak of the excitation VEXC voltage. It should be understood the threshold can be configured at a different percentage of the VEXC voltage peak by selecting the appropriate values for the resistors (R1, R2) and capacitor (C1) that are input into the comparator of the synchronization clock generation circuit 410. Each of the flip flops 426, 428, and 430 provide the corresponding synchronized output signals (exc_pos_sync, sin_pos_sync, and cos_pos_sync) responsive to the received sync_clk signal. A controller 450 can be configured to receive the outputs from each of the flip flops 426, 428, and 430 to determine the direction of rotation for the resolver 402 and the speed of the resolver 402.

The flip flops 426, 428, and 430 are also coupled to and receive a Power on Reset (POR) signal from a POR circuit 412. In one or more embodiments, the POR circuit 412 is used to initialize the flip flops 426, 428, and 430 of the synchronizer circuit 408 to a known state prior to the operation of the resolver.

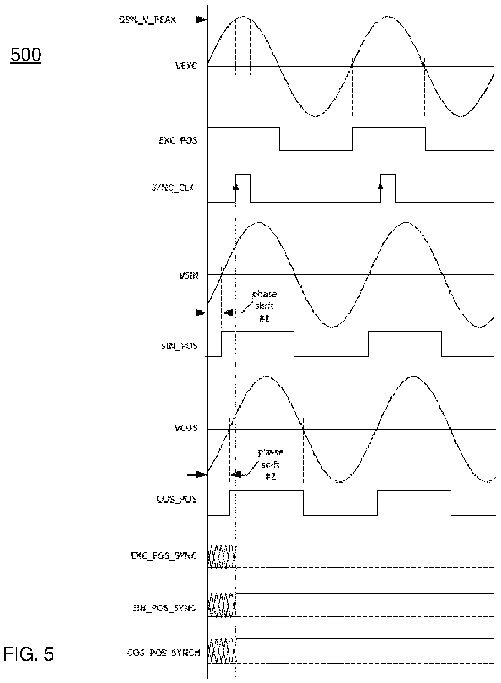

FIG. 5 depicts a timing diagram 500 during the operation of the resolver 402 in accordance with one or more embodiments. The timing diagram 500 illustrates the need for a synchronization circuit 408 as described with reference to FIG. 4.

The first waveform VEXC represents the excitation voltage and the EXC_POS waveform indicates when the EXC_POS is HI and LO. The SYNC_CLK waveform indicates when the clock signal is triggered on the rising edge of the VEXC waveform is 95% of the peak excitation voltage.

The VSIN waveform as shown has a time delay and is phase shifted, where the phase shift is due to the physics of a practical resolver. Therefore, the SIN_POS waveform does not become HI for a period of time (Phase shift #1) representative of the delay.

The VCOS waveform also experiences a delay (phase shift #2), where the phase shift is due to the physics of a practical resolver, and the VCOS_POS waveform does not change for a period time.

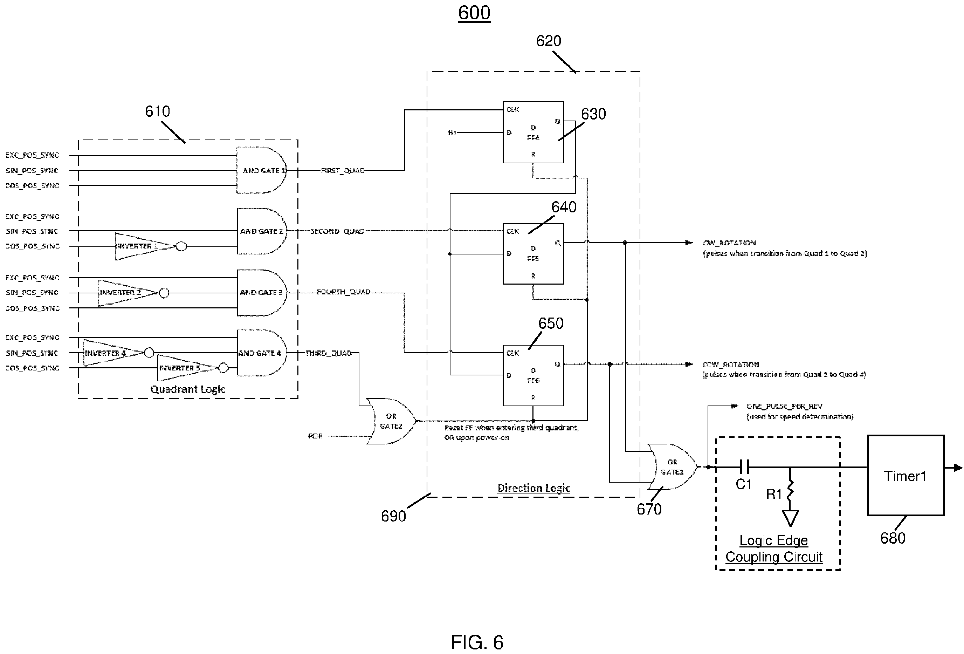

The inputs EXC_POS, SIN_POS, and COS_POS are presented to the inputs of the corresponding flip flops and are synchronized using the clock signal. The synchronized signals EXC_POS_SYNC, SIN_POS_SYNC, and COS_POS_SYNC are shown as being aligned and are output of the corresponding flip flops. The outputs of the flip flops 426, 428, and 430 are processed by the Controller 660 FIG. 6 to determine the rotational direction of the resolver shaft. This allows for the correct position information to be obtained during the analysis.

FIG. 6 depicts logic implementation for determining the rotational direction of the resolver. A quadrant logic module 610 receives outputs of the synchronization circuit 408. The quadrant logic 610 includes AND Gates 1, 2, 3, and 4 and Inverters 1, 2, 3, and 4. The AND gate produces a logic HI signal when each of its inputs are HI and a LO signal if any of its inputs are LO. Each AND Gate 1, 2, 3, and 4 produces the respective output signal (First-quad, second_quad, third_quad, and fourth_quad signals) to be provided to a direction logic 620. The quadrant truth table is referenced with FIG. 7 is further discussed below.

The Inverter inverts the input to the Invertor. For example, a logic HI input signal will output a logic LO signal and a logic LO signal will output a logic HI signal.

The first_quad signal from the first AND Gate 1 is provided to the clock input, and the D input of the flip flop 630 is initialized to the HI state to track transitions from the first quadrant. It should be understood that another quadrant can be initialized to determine the rotational direction of the resolver.

The second_quad signal from the second AND Gate 2 is provided to the clock input of the flip flop 640, and the "Q" output of the flip flop 630 is provided as an input to the D input of the flip flop 640. If the "Q" output of flip flop 640 transitions from LO to HI a clockwise rotation is determined. The fourth_quad signal from the AND Gate 3 is provided to the clock input of the flip flop 650, and the "Q" output of the flip flop 630 is provided as an input to the D input of the flip flop 650. If the "Q" output of flip flop 650 transitions from LO to HI a counter-clockwise rotation is determined. The third_quad signal provided from the AND Gate 4 is used to reset the flip flops 630, 640, and 650 (flip flop "Q" outputs set to LO) so the process of determining quadrant transitions can repeat with every full rotation of the resolver shaft.

The direction logic 620 includes flips flops 630, 640, and 650. The "Q" output of the first flip flop 630 is coupled to the D input of flip flops 640 and 650. This indicates the first state is in the first quadrant. If the Q output of the second flip flop 640 transitions from LO to HI, the output indicates the resolver is operating in a clockwise direction because the direction is from the first quadrant to the second quadrant. If the Q output of the third flip flop 650 transitions from LO to HI, the output indicates the resolver is operating in a counter clockwise direction because the direction is from the first quadrant to the fourth quadrant.

The output of AND Gate 4 is provided to an OR GATE 2 and can reset the flip flops 630, 640, and 650 of the direction logic 620. In one or more embodiments, the OR GATE 1 receives an output from the flip flop 640 and the flip flop 650 and produces a single pulse for each full revolution of the resolver shaft. The OR gate is a logic gate that will produce a logic HI output if any of its inputs is HI. If each of the inputs to the OR gate are LO, the output of the OR gate is LO. This pulse can be used to determine the rotational speed of the resolver shaft by a number of common methods.

The circuit 600 also includes a TIMER1 which produces an under-speed logic output if the rotational speed of the shaft of the resolver falls below the period of TIMER1. The circuit 600 also includes a logic edge coupling circuit 690 that is configured to permit an underspeed indication in the event the resolver happens to stop in the second or fourth quadrant. The time-out period of the TIMER1 is based on the slowest allowable rotation speed of the resolver. If the TIMER1 does not receive a HI pulse from the OR gate, indicating a clockwise transition or a counter-clockwise transition, an under-speed signal is produced. A controller 660 can be configured to receive the signals and produce one-pulse-per revolution based on the signals. The speed can then be determined by translating the pulses using one or more circuits or processes (not shown). It should be understood that a different combination of logic elements can be used and the configuration shown in FIG. 6 is illustrative and not intended to limit the scope of the disclosure.

FIG. 7 depicts a Quadrant Truth Table 700 in accordance with one or more embodiments. A logic "1" indicates the polarity of the voltage is positive and a logic "0" indicates the polarity of the voltage is negative. The voltage of the excitation winding, the SIN winding, and COS winding are shown. The table 700 includes 8 entries; however, only 4 are needed to implement the techniques that are described herein. As shown the first four entries are not decoded because in this non-limiting example, the logic is asserted when a logic HI or positive state is determined.

The technical effects and benefits eliminate the noise-prone rate-of-change method used to determine the resolver speed. Additionally, the complexity of calculating the instantaneous angle using traditional trigonometric methods that employ the analog values of the sin voltage and cosine voltage is eliminated. The techniques described do not require rate-of-change information and can generate a pulse for each revolution of the resolver shaft which can be used to determine the speed of the resolver.

As described above, embodiments can be in the form of processorimplemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a generalpurpose microprocessor, the computer program code segments configure the microprocessor to create specific logic circuits.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system comprising:
a resolver (400) comprising a primary winding and a set of secondary windings, wherein the resolver has a resolver shaft;
a polarity detection circuit (406) coupled to the resolver, wherein the polarity detection circuit comprises a first comparator adapted to determine a polarity of a voltage signal from a power source, a second comparator adapted to determine a polarity of a voltage signal of a first winding of the set of secondary windings, and a third comparator adapted to determine a polarity of a voltage signal of a second winding of the set of secondary windings;
a synchronizer circuit (408) coupled to the polarity detection circuit, wherein the synchronizer circuit is adapted to synchronize signals from the polarity detection circuit; and
a controller (450) configured to determine a direction of rotation of the resolver shaft using an output of the synchronizer circuit, wherein the direction of rotation is a clockwise direction or counter-clockwise direction.

2. The system of any preceding claim, wherein the synchronizer circuit comprises a first circuit, second circuit, and a third circuit.

3. The system of claim 2, further comprising a reset circuit configured to initialize the synchronizer circuit.

4. The system of any preceding claim, wherein synchronizer circuit comprises a first flip flop, a second flip flop and a third flip flop corresponding to the first comparator circuit, a second comparator, and a third comparator of the polarity detection circuit.

5. The system of any preceding claim, further comprising a synchronization clock generation circuit coupled to the synchronizer circuit.

6. The system of claim 5, wherein the synchronization clock generation circuit is configured to provide a clock signal to the synchronizer circuit at a configurable threshold.

7. The system of claim 6, wherein the synchronization clock generation circuit comprises a rectifier, a filter and a comparator to configure a threshold to trigger the clock signal.

8. The system of any preceding claim, wherein the controller is configured to determine an under-speed condition or a non-rotation condition.

## Patentansprüche

1. System, umfassend:
einen Resolver (400), umfassend eine Primärwicklung und einen Satz von Sekundärwicklungen, wobei der Resolver eine Resolverwelle aufweist;
eine Polaritätserkennungsschaltung (406), die mit dem Resolver gekoppelt ist, wobei die Polaritätserkennungsschaltung einen ersten Komparator umfasst, der geeignet ist, eine Polarität eines Spannungssignals von einer Stromquelle zu bestimmen, einen zweiten Komparator, der geeignet ist, eine Polarität eines Spannungssignals einer ersten Wicklung des Satzes von Sekundärwicklungen zu bestimmen, und einen dritten Komparator, der geeignet ist, eine Polarität eines Spannungssignals einer zweiten Wicklung des Satzes von Sekundärwicklungen zu bestimmen;
eine Synchronisierschaltung (408), die mit der Polaritätserkennungsschaltung gekoppelt ist, wobei die Synchronisierschaltung dazu geeignet ist, Signale von der Polaritätserkennungsschaltung zu synchronisieren; und
eine Steuerung (450), die dazu konfiguriert ist, eine Drehrichtung der Resolverwelle unter Verwendung eines Ausgangssignals der Synchronisationsschaltung zu bestimmen, wobei die Drehrichtung im Uhrzeigersinn oder gegen den Uhrzeigersinn ist.

2. System nach einem der vorhergehenden Ansprüche, wobei die Synchronisationsschaltung eine erste Schaltung, eine zweite Schaltung und eine dritte Schaltung umfasst.

3. System nach Anspruch 2, ferner umfassend eine Rücksetzschaltung zur Initialisierung der Synchronisierschaltung.

4. System nach einem der vorhergehenden Ansprüche, wobei die Synchronisierschaltung ein erstes Flipflop, ein zweites Flipflop und ein drittes Flipflop umfasst, die der ersten Komparatorschaltung, einem zweiten Komparator und einem dritten Komparator der Polaritätserkennungsschaltung entsprechen.

5. System nach einem der vorhergehenden Ansprüche, ferner umfassend eine Synchronisationstakterzeugungsschaltung, die mit der Synchronisierschaltung gekoppelt ist.

6. System nach Anspruch 5, wobei die Synchronisationstakterzeugungsschaltung dazu konfiguriert ist, der Synchronisierschaltung ein Taktsignal mit einem konfigurierbaren Schwellenwert bereitzustellen.

7. System nach Anspruch 6, wobei die Synchronisationstakterzeugungsschaltung einen Gleichrichter, einen Filter und einen Komparator umfasst, um einen Schwellenwert zum Auslösen des Taktsignals zu konfigurieren.

8. System nach einem der vorhergehenden Ansprüche, wobei die Steuerung dazu konfiguriert ist, eine Unterdrehzahlbedingung oder eine Nichtdrehzahlbedingung zu bestimmen.

## Revendications

1. Système comprenant :
un résolveur (400) comprenant un enroulement primaire et un ensemble d'enroulements secondaires, dans lequel le résolveur a un arbre de résolveur ;
un circuit de détection de polarité (406) couplé au résolveur, dans lequel le circuit de détection de polarité comprend un premier comparateur adapté pour déterminer une polarité d'un signal de tension provenant d'une source d'alimentation, un deuxième comparateur adapté pour déterminer une polarité d'un signal de tension d'un premier enroulement de l'ensemble d'enroulements secondaires, et un troisième comparateur adapté pour déterminer une polarité d'un signal de tension d'un second enroulement de l'ensemble d'enroulements secondaires ;
un circuit de synchronisation (408) couplé au circuit de détection de polarité, dans lequel le circuit de synchronisation est adapté pour synchroniser des signaux provenant du circuit de détection de polarité ; et
un dispositif de commande (450) configuré pour déterminer un sens de rotation de l'arbre de résolveur à l'aide d'une sortie du circuit de synchronisation, dans lequel le sens de rotation est un sens horaire ou un sens anti-horaire.

2. Système selon une quelconque revendication précédente, dans lequel le circuit de synchronisation comprend un premier circuit, un deuxième circuit et un troisième circuit.

3. Système selon la revendication 2, comprenant en outre un circuit de réinitialisation configuré pour initialiser le circuit de synchronisation.

4. Système selon une quelconque revendication précédente, dans lequel le circuit de synchronisation comprend une première bascule, une deuxième bascule et une troisième bascule correspondant au premier circuit de comparateur, à un deuxième comparateur et à un troisième comparateur du circuit de détection de polarité.

5. Système selon une quelconque revendication précédente, comprenant en outre un circuit de génération d'horloge de synchronisation couplé au circuit de synchronisation.

6. Système selon la revendication 5, dans lequel le circuit de génération d'horloge de synchronisation est configuré pour fournir un signal d'horloge au circuit de synchronisation à un seuil configurable.

7. Système selon la revendication 6, dans lequel le circuit de génération d'horloge de synchronisation comprend un redresseur, un filtre et un comparateur pour configurer un seuil de déclenchement du signal d'horloge.

8. Système selon une quelconque revendication précédente, dans lequel le dispositif de commande est configuré pour déterminer une condition de sous-vitesse ou une condition de non-rotation.
